(19) Europäisches Patentamt
European Patent Office
Office européen des brevets

(11) **EP 3 039 662 B1**

(12) **EUROPÄISCHE PATENTSCHRIFT**

(45) Veröffentlichungstag und Bekanntmachung des Hinweises auf die Patenterteilung:
**10.08.2022   Patentblatt 2022/32**

(21) Anmeldenummer: **14753276.6**

(22) Anmeldetag: **22.08.2014**

(51) Internationale Patentklassifikation (IPC):
*G08G 1/16* (2006.01)        *H04W 4/02* (2018.01)
*H04L 65/40* (2022.01)        *G08G 1/09* (2006.01)
*G08G 1/0967* (2006.01)        *H04L 67/63* (2022.01)
*H04W 4/40* (2018.01)        *H04W 84/18* (2009.01)

(52) Gemeinsame Patentklassifikation (CPC):
**H04W 84/18; G08G 1/093; G08G 1/162;**
**G08G 1/163; H04L 67/63; H04W 4/02; H04W 4/40;**
G08G 1/09675; G08G 1/096791; G08G 1/166

(86) Internationale Anmeldenummer:
**PCT/EP2014/067941**

(87) Internationale Veröffentlichungsnummer:
**WO 2015/028408 (05.03.2015 Gazette 2015/09)**

(54) **VERARBEITUNGSPFADABHÄNGIGE FILTERUNG VON IM CAR2X-NETZWERK EMPFANGENEN DATENPAKETEN**

PROCESSING-PATH-DEPENDENT FILTERING OF DATA PACKETS RECEIVED IN THE CAR2X NETWORK

FILTRAGE DE PAQUETS DE DONNÉES REÇUS DANS UN RÉSEAU CAR2X, EFFECTUÉ EN FONCTION DU CHEMIN DE TRAITEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2013   DE 102013216947**

(43) Veröffentlichungstag der Anmeldung:
**06.07.2016   Patentblatt 2016/27**

(73) Patentinhaber: **Continental Automotive Technologies GmbH**
**30165 Hannover (DE)**

(72) Erfinder:
• **SCHERPING, Richard**
  **65835 Liederbach am Taunus (DE)**
• **STÄHLIN, Ulrich**
  **65760 Eschborn (DE)**
• **MENZEL, Marc**
  **35096 Weimar (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
EP-A1- 2 178 064        DE-A1- 19 849 294
DE-A1-102006 029 525        DE-T5-112009 001 557
US-A1- 2013 083 679

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Weiterleiten eines wenigstens Positionsdaten enthaltenden Datenpakets, das über einem Fahrzeug-Ad-hoc-Netzwerk in einem Übertragungssignal getragen empfangen wird, eine Weiterleitungsvorrichtung zur Durchführung des Verfahrens und einen Transceiver mit der Weiterleitungsvorrichtung.

Aus der WO 2010 / 139 526 A1 ist ein Car2X genanntes mobiles Ad-hoc-Netz bekannt, dessen Knoten bestimmte Straßenverkehrsteilnehmer wie Fahrzeuge oder andere Objekte im Straßenverkehr, wie Ampeln sind. Über diese Netzwerke können den am Car2X-Netzwerk beteiligten Straßenverkehrsteilnehmern Hinweise über Straßenverkehrszustände, wie Unfälle, Staus, Gefahrensituationen, ... bereitgestellt werden.

Die US 2013 083 679 A1 beschreibt ein Filtern eines über ein Fahrzeug-Ad-hoc-Netzwerk übertragenen Datenpakets durch eine Fahrzeugkommunikationseinheit auf Basis einer Filterbedingung und Ausgeben des gefilterten Datenpakets an eine Verarbeitungseinrichtung zum Verarbeiten des gefilterten Datenpakets. Das solchermaßen gefilterte Datenpacket kann zudem, umfassend ein ermitteltes Zuverlässigkeitsmaß, an weitere Fahrzeuge weitergeleitet werden.

Es ist Aufgabe die Nutzung derartiger mobiler Ad-hoc-Netze zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Empfangen eines wenigstens Positionsdaten enthaltenden Datenpakets in einem Übertragungssignal über ein Fahrzeug-Ad-hoc-Netzwerk nach Anspruch 1.

Dem angegebenen Verfahren liegt die Überlegung zugrunde, dass in einem Fahrzeug-Ad-hoc-Netzwerk je nach Verkehrssituation eine unterschiedlich hohe Datenlast anfallen kann, die dann von den entsprechenden Empfängern in den am Fahrzeug-Ad-hoc-Netzwerk teilnehmenden Fahrzeugen oder anderen Knoten verarbeitet werden muss. Dabei werden in dem Fahrzeug-Ad-hoc-Netzwerk grob gesagt zu versendende Nachrichten zunächst in Datenpaketen verpackt, die dann wiederrum auf ein Übertragungssignal moduliert werden. Entsprechend muss ein Empfänger der versendeten Nachrichten zunächst die Datenpakete aus dem Übertragungssignal filtern und dann die Nachrichten aus den gefilterten Datenpaketen entpacken. Erst dann können die Nachrichten zur Informierung des Fahrers eines Fahrzeuges oder sogar zur aktiven Steuerung des Fahrzeuges verwendet werden. Ein entsprechend rechenintensiver Algorithmus ist auch bei der Weiterleitung notwendig, um beispielsweise anhand einer Umfeldtabelle oder dergleichen über die Weiterleitung an sich zu entscheiden.

Das Filtern aus dem Übertragungssignal und insbesondere das Entpacken der Nachrichten aus den Datenpaketen bedarf entsprechender Rechenressourcen, die je nach aufkommender Datenlast in dem Fahrzeug-Ad-Hoc-Netzwerk entsprechend leistungsfähig dimensioniert sein müssen, wobei sich die Dimensionierung im Extremfall an der maximal möglichen Kanallast orientieren muss. Die maximal mögliche Kanallast wird aber nur in besonders extremen Situationen, wie beispielsweise sehr hohen Verkehrsaufkommen (Stau, ...) ausgenutzt, in denen Fahrzeug-Ad-hoc-Netzwerk in der Regel auch viele Nachrichten mit redundanter Information oder nicht interessierender Information übertragen. Datenpakete, die derartige Nachrichten mit redundanten oder nicht interessierenden Informationen enthalten könnten prinzipiell aussortiert werden.

Eine Entscheidung hierüber ist aber ebenfalls mit einem entsprechen hohen Rechenaufwand verbunden, weil zur Entscheidung über die Information zunächst über die diese Information meldende Nachricht entpackt werden muss. Werden die Datenpakete daher basierend auf den mit den Nachrichten gefilterten Informationen gefiltert ist keine besondere Reduktion des Rechenaufwandes und damit der bereitzuhaltenden Rechenressourcen zu erwarten.

Eine Möglichkeit zur Reduktion der Rechenressourcen wäre vor dem Entpacken einer empfangenen Nachricht entweder anhand der Datenpakete selbst oder sogar auf der Ebene des Übertragungssignals darüber zu entscheiden, ob die empfangene Nachricht relevant ist, oder nicht. Dies könnte anhand vorbestimmter Bedingung durchgeführt werden, die bereits anhand des Übertragungssignal und/der des Datenpaketes eine Bewertung ermöglichen, inwieweit die im Datenpaket verpackte Nachricht relevant ist und ob eine ausreichende Notwendigkeit (Relevanz) oder sogar eine ausreichende Möglichkeit (ausreichende freie Kanalkapazität) vorliegt das Datenpaket weiterzuleiten.

Ein derartiger Ansatz ist bereits aus der Objekterkennung mit einem Kamerasystem bekannt, auf dessen Grundlage ebenfalls teils verkehrssicherheitskritische Entscheidungen getroffen werden müssen. Die Datenmenge einer der Objekterkennung zugrundeliegenden Kamera ist so hoch, dass die unmittelbare Pixeldatenmenge aus der Kamera nicht direkt für alle notwendigen Objekterkennungen verwendet werden kann. So werden die notwendigen Informationen aus der Pixeldatenmenge in Zwischenstufen gesammelt und immer weiter verdichtet. So können in einer ersten Zwischenstufe beispielsweise aus der Pixeldatenmenge bestimmte Objekt- und Szeneninformationen gesammelt werden wie beispielsweise ob die Fahrspur links und/oder rechts vom Fahrzeug ist. Wird in einer Zwischenstufe jedoch eine falsche Entscheidung getroffen, so schlägt sich diese falsche Entscheidung in allen nachstehenden Zwischenstufen nieder und führt dazu, dass relevante Objekte oder Szenen möglicherweise nicht als solche erkannt werden. Über die Zeit ist jedoch die bestmögliche Erkennung aller relevanten Objekte sichergestellt, weil stets eine Abwägung zwischen Rechenaufwand und Erkennungsleistung durchgeführt wird.

Mit der Erkenntnis, dass die Pixel aus der Kamera wie die Datenpakete in dem Fahrzeug-Ad-hoc-Netzwerk für das Verarbeitungssystem im Fahrzeug eine Art Rohdaten darstellen, kann das Prinzip der Objekterkennung mit einem Kamerasystem auch auf die Informationsübermittlung mit dem Fahrzeug-Ad-hoc-Netzwerk übertragen werden, wobei die Auswahl der relevanten Nachrichten in bereits erläuterter Weise auf der Ebene des Übertragungssignals und/oder der Datenpakete durchgeführt wird. Zwar ist auf diese Weise nicht mehr sichergestellt, dass alle wichtigen Datenpakete auch weitergeleitet werden. Es ist jedoch davon auszugehen, dass Datenpakete mit relevanten Nachrichten, wie beispielsweise von einem Liegenbleiber auf der Straße, häufiger versendet werden. Durch die sich ständig ändernden Randbedingungen zwischen zwei versendeten Datenpaketen mit derselben Nachricht und vom selben Sender ist im statistischen Mittel davon auszugehen, dass die Datenpakete rechtzeitig das durch die vorbestimmte Bedingung definierte Filter passieren und so das gewünschte Ziel rechtzeitig erreichen. Wie bei der oben genannten Objekterkennung mit dem Kamerasystem wird damit im Rahmen der vorliegenden Erfindung vorgeschlagen zwischen Rechenaufwand und Erkennungsleistung abzuwägen. Dies wird mit der vorbestimmten Bedingung umgesetzt, die zweckmäßigerweise über die Zeit verändert wird, um zwischen dem Rechenaufwand und der Erkennungsleistung abzuwägen.

Zwar würde eine Bewertung einer empfangenen Nachricht nur durch Betrachten des Datenpaketes, in dem sie verpackt ist und/oder des sie tragenden Übertragungssignals eine beträchtliche Menge an Rechenressourcen sparen, wenn die empfangene Nachricht als irrelevant eingestuft und somit aussortiert werden kann. Im Rahmen des angegebenen Verfahrens wird jedoch erkannt, dass eine abschließende Bewertung über die empfangene Nachricht auch vom weiteren Verwendungszweck der empfangenen Nachrichte abhängig ist. Grundsätzlich kann gesagt werden, dass die vorbestimmte Bedingung für eine im Fahrzeug-Ad-Hoc-Netzwerk an andere Knoten weiterzuleitende und in einem Datenpacket mit einem Übertragungssignal empfangene Nachricht anders gewählt werden sollte, als für eine empfangene Nachricht, die für eine fahrzeuginterne Anwendung bestimmt ist. Als Beispiel kann hier die Bewertung basierend auf der Signalstärke des Übertragungssignals genannt werden, denn während bei einer weiterzuleitenden Nachricht möglichst nur Übertragungssignale mit kleinen Signalstärken berücksichtigt werden sollten, weil für Übertragungssignale mit hohen Signalstärken von allzu nahen Sendern keine nennenswerte Reichweitenvergrößerung erzielt werden kann, sollten für eine fahrzeugintern zu verwendende Nachricht genau gegenteilig nur empfangene Nachrichten in Übertragungssignalen einer möglichst großen Signalstärke berücksichtigt werden, weil die Information von allzu weit entfernten Sendern per se als irrelevant eingestuft werden kann.

Hier greift das angegebene Verfahren mit dem Vorschlag an, bei der Filterung eines Übertragungssignals und des darin getragenen Datenpaketes zwei verschiedene Filterpfade zu verwenden. Während auf einem ersten Signalpfad über die Weiterleitung entschieden werden kann, kann auf dem zweiten Filterpfad über die fahrzeuginterne Weiterverarbeitung entschieden werden. Die beiden Signalpfade können dann an den unterschiedlichen Bearbeitungsaufwand angepasst werden, der notwendig ist, um das noch nicht demodulierte Übertragungssignal und/oder die noch nicht ausgepackten Datenpakete bestimmungsgemäß weiterzuverwenden, so dass schlussendlich vier verschiedene Verarbeitungszustände möglich sind:

1. eine empfangene Nachricht wird bereits vor dem Entpacken vollständig verworfen,
2. eine empfangene Nachricht wird nur weitergeleitet aber nicht empfängerintern verarbeitet,
3. eine empfangene Nachricht wird nur empfängerintern verarbeitet aber nicht weitergeleitet, oder
4. eine empfangene Nachricht wird in herkömmlicher Weise vollständig entpackt und durchläuft den vollständigen Verarbeitungsweg.

Durch die Trennung bei der Filterung einer empfangenen aber wenigstens noch in einem Datenpaket verpackten und optional noch auf einem Übertragungssignal getragenen Nachricht zwischen weiterzuleitenden Nachrichten und empfängerintern zu verarbeitenden Nachrichten können durch den verschiedenen Rechenaufwand bei der Behandlung der empfangenen Nachricht auf den beiden Signalpfaden Einsparungen im Rechenaufwand insbesondere in Hochlastsituationen des Car2X-Netzwerkes erreicht werden.

In einer Weiterbildung des angegebenen Verfahrens werden das Filtern basierend auf der ersten Filterbedingung und das Filtern basierend auf der zweiten Filterbedingung unabhängig voneinander durchgeführt.

Erfindungsgemäß umfasst die erste Filterbedingung eine Mindestsignalstärke für eine Signalstärke des Übertragungssignals. Dabei kann das Filtern des empfangenen Datenpaketes ein Verwerfen des empfangenen Datenpaketes umfassen, wenn die Signalstärke des empfangenen Datenpakets unter die Mindestsignalstärke fällt.

In einer besonderen Weiterbildung des angegebenen Verfahrens ist die erste Filterbedingung von einem Betrieb der Verarbeitungseinrichtung abhängig. Dabei kann das Filtern des empfangenen Datenpaketes ein Verwerfen des empfangenen Datenpaketes umfassen, wenn eine in dem Datenpaket verpackte Nachricht für den Betrieb der Verarbeitungseinrichtung irrelevant ist.

Erfindungsgemäß umfasst die zweite Filterbedingung eine Maximalfeldstärke für eine Signalstärke des Übertragungssignals. Dabei kann das Filtern des empfangenen Datenpaketes ein Verwerfen des empfangenen Datenpaketes umfassen, wenn die Signalstärke des empfangenen Datenpakets über der Maximalfeldstärke liegt.

Gemäß einem weiteren Aspekt der Erfindung ist eine Vorrichtung nach Anspruch 7 eingerichtet, ein angegebenes Verfahren durchzuführen.

Erfindungsgemäß weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

In einem Beispiel, das nicht Gegenstand der Ansprüche ist, umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

In einem weiteren Beispiel, das nicht Gegenstand der Ansprüche ist, enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

In einer Weiterbildung umfasst ein Transceiver für ein Fahrzeug zum Empfangen von in einem Übertragungssignal versendeten Datenpaketen in einem Fahrzeug-Ad-Hoc-Netzwerk eine Antenne zum Empfangen des Übertragungssignals und eine der angegebenen Vorrichtungen zur Durchführung eines der angegebenen Verfahren.

In einem Beispiel, das nicht Gegenstand der Ansprüche ist, umfasst ein Fahrzeug einen der angegebenen Transceiver.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

Fig. 1 eine Prinzipdarstellung eines auf einer Straße fahrenden Fahrzeuges,

Fig. 2 eine Prinzipdarstellung des Fahrzeuges der Fig. 1,

Fig. 3 eine Prinzipdarstellung eines Fahrzeug-Ad-Hoc-Netzwerkes, an dem das Fahrzeug der Fig. 1 und 2 teilnehmen kann,

Fig. 4 eine Prinzipdarstellung eines Transceivers in dem Fahrzeug-Ad-Hoc-Netzwerk 1 der Fig. 3,

Fig. 5 eine Prinzipdarstellung von zu filternden Signalen, die aus dem Fahrzeug-Ad-Hoc-Netzwerk der Fig. 3 empfangen wurden,

Fig. 6 eine Prinzipdarstellung von zu gefilterten Signalen, die aus dem Fahrzeug-Ad-Hoc-Netzwerk der Fig. 3 empfangen wurden,

Fig. 7a und 7b eine Prinzipdarstellung eines Empfangsfilters zum Filtern des Signals der Fig. 4,

Fig. 8a und 8b eine Prinzipdarstellung von Datenpaketen, die aus einem über das Fahrzeug-Ad-Hoc-Netzwerk der Fig. 3 empfangenen Signal gefiltert wurden,

Fig. 9 eine Prinzipdarstellung von zu filternden Signalen, die aus dem Fahrzeug-Ad-Hoc-Netzwerk der Fig. 3 empfangen wurden,

Fig. 10 eine Prinzipdarstellung von gefilterten Signalen, die aus dem Fahrzeug-Ad-Hoc-Netzwerk der Fig. 3 empfangen wurden,

Fig. 11a und 11b eine Prinzipdarstellung von Datenpaketen, die aus einem über das Fahrzeug-Ad-Hoc-Netzwerk der Fig. 3 empfangenen Signal gefiltert wurden, und

Fig. 12a und 12b eine Prinzipdarstellung eines Übertragungssignals in dem Car2X-Netzwerk 1 der Fig. 3 in zwei verschiedenen Kanalauslastungszuständen zeigen.

In den Figuren werden gleiche technische Elemente mit gleichen Bezugszeichen versehen und nur einmal beschrieben.

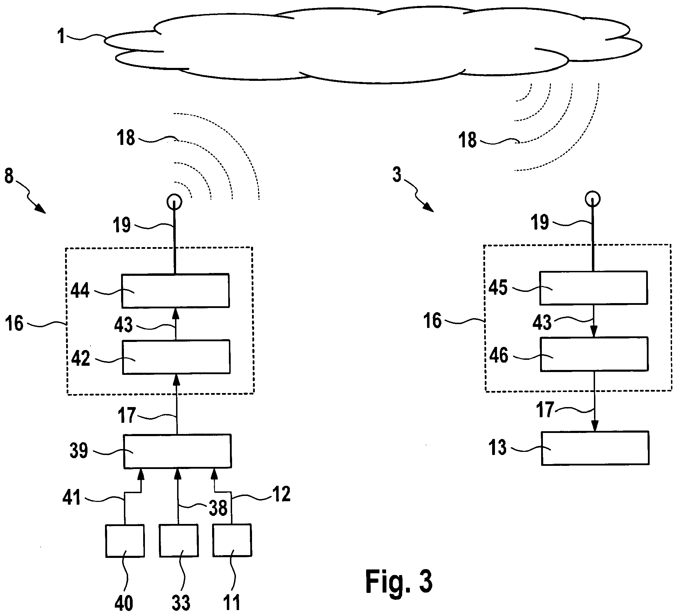

Die Erfindung steht in Zusammenhang mit einem Netzwerkprotokoll für ein in Fig. 3 gezeigtes Fahrzeug-Ad-Hoc-Netzwerk, das nachstehend der Einfachheit halber Car2X-Netzwerk 1 genannt wird. Zur besseren Verständlichkeit des technischen Hintergrundes zu diesem Car2X-Netzwerk 1 soll zunächst ein nicht einschränkendes Anwendungsbeispiel zu diesem Car2X-Netzwerk 1 gegeben werden, bevor auf technische Einzelheiten zu diesem näher eingegangen wird.

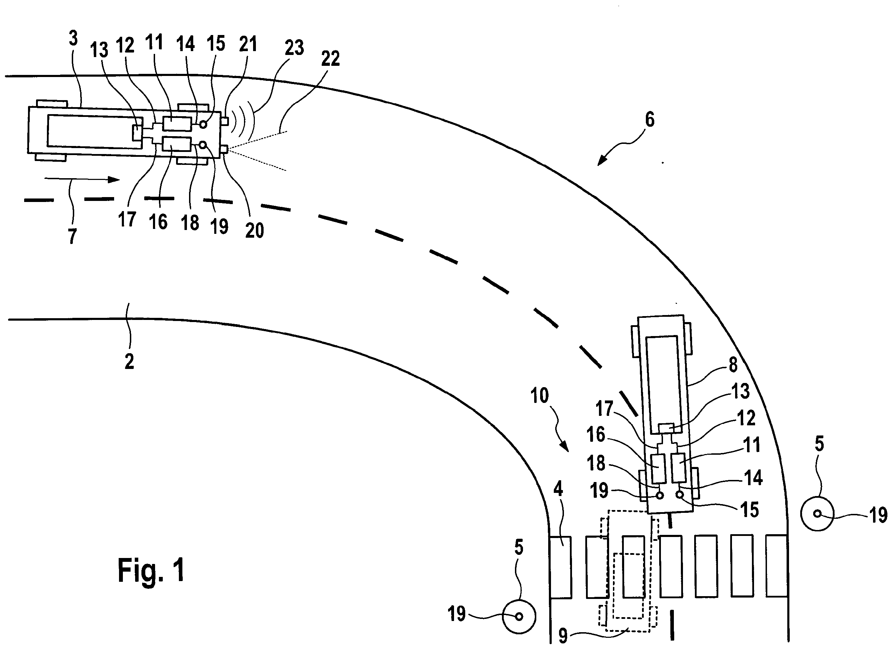

Es wird daher auf Fig. 1 Bezug genommen, die eine Prinzipdarstellung eines auf einer Straße 2 fahrenden Fahrzeuges 3 zeigt.

In der vorliegenden Ausführung, die nicht Gegenstand der Ansprüche ist, soll sich auf der Straße 2 eine Fußgängerüberführung 4 befinden, an der mittels einer Ampel 5 geregelt wird, ob das Fahrzeug 4 auf der Straße 2 die Fußgängerüberführung 4 überqueren darf oder ein nicht weiter dargestellter Fußgänger auf der Fußgängerüberführung 4 die Straße 2. Zwischen der Fußgängerüberführung 4 und der Ampel 5 befindet sich im Rahmen der nicht beanspruchten Ausführung ein Hindernis in Form einer Kurve 9, die die Fußgängerüberführung 4 dem Fahrer des Fahrzeuges 3 sowie einer noch zu beschreibenden Umfeldsensorik des Fahrzeuges 3 gegenüber verdeckt.

In einer Fahrtrichtung 7 vor dem Fahrzeug 3 ist in Fig. 1 ein weiteres Fahrzeug 8 dargestellt, das mit einem gepunktet dargestellten Fahrzeug 9 auf der Fußgängerüberführung 4 in einen Verkehrsunfall 10 verwickelt ist und die Fahrspur in Fahrtrichtung 7 des Fahrzeuges 3 blockiert.

Die Fußgängerüberführung 4 und der Verkehrsunfall 10 stellen Gefahrensituationen auf der Straße 2 dar. Übersieht der Fahrer des Fahrzeuges 3 die Fußgängerüberführung 4 und hält vor dieser damit regelwidrig nicht an, so könnte er einen die Fußgängerüberführung 4 überquerenden Fußgänger erfassen, der beim Überqueren der Fußgängerüberführung 4 auf das regelkonforme Verhalten des Fahrers des Fahrzeuges 3 vertraut. In beiden Gefahrensituationen muss der Fahrer des Fahrzeuges 3 das Fahrzeug 3 anhalten, um eine Kollision mit dem Gefahrenobjekt in der Gefahrensituation, also dem Fußgänger und/oder dem weiteren Fahrzeug 8 zu vermeiden. Hierzu kann das Car2X-Netzwerk 1 verwendet werden, worauf an späterer Stelle näher eingegangen wird.

Das Fahrzeug 3 weist in der nicht beanspruchten Ausführung einen Empfänger 11 für ein globales Satellitennavigationssystem, nachstehend GNSS-Empfänger 11 genannt auf, über den das Fahrzeug 3 in einer an sich bekannten Weise Positionsdaten in Form seiner absoluten geographischen Lage 12 bestimmen und beispielsweise im Rahmen eines Navigationssystems 13 nutzen kann, um diese auf einer nicht weiter dargestellten geographischen Karten anzuzeigen. Entsprechende Signale 14 des Globalen Satellitennavigationssystems, nachstehend GNSS-Signale 14 genannt, können beispielsweise über eine entsprechende GNSS-Antenne 15 empfangen und in an sich bekannter Weise an den GNSS-Empfänger 11 weitergeleitet werden.

Das Fahrzeug weist in der nicht beanspruchten Ausführung ferner einen Transceiver 16 auf, über den das Fahrzeug 3 als Knoten am Car2X-Netzwerk 1 teilnehmen und mit anderen Knoten, wie beispielsweise dem weiteren Fahrzeug 8 und/oder der Ampel 5 nachstehend Car2X-Nachrichten 17 genannte Nachrichten austauschen kann. Dieser Transceiver 16 soll zur Abgrenzung gegenüber dem GNSS-Empfänger 11 nachstehend Car2X-Transceiver 16 genannt werden.

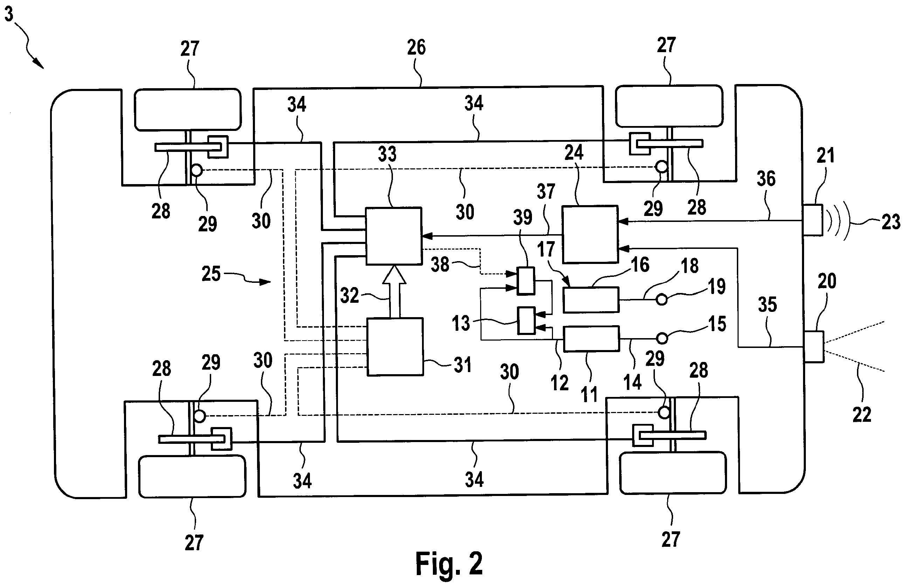

In den über das Car2X-Netzwerk 1 ausgetauschten Car2X-Nachrichten 17, können die einzelnen Knoten 3, 5, 8 untereinander verschiedene Informationen beschreibende Daten austauschen mit denen beispielsweise die Verkehrssicherheit auf der Straße 2 erhöht werden kann. Ein Beispiel für die Informationen, die mit den Daten in den Car2X-Nachrichten 17 ausgetauscht werden können, wäre die über den GNSS-Empfänger 11 bestimmte absolute geographische Lage 12 des jeweiligen Knotens 3, 5, 8 des Car2X-Netzwerkes 1. Derartige Daten können auch als Positionsdaten bezeichnet werden. Ist der die geographische Lage 12 empfangende Knoten 3, 5, 8 des Car2X-Netzwerkes 1 ein Fahrzeug, wie beispielsweise das nicht am Verkehrsunfall 10 beteiligte Fahrzeug 3 und das am Verkehrsunfall 10 beteiligte Fahrzeug 8 dann kann die über das Car2X-Netzwerk 1 empfangene geographische Lage 12 beispielsweise auf dem Navigationssystem 13 des empfangenden Fahrzeuges 3, 8 zur Darstellung beispielsweise der Verkehrsbewegung verwendet werden. Wird neben der absoluten geographischen Lage 12 auch der Verkehrsunfall 10 als Information mit den Daten in der Car2X-Nachricht 17 beschrieben, so können bestimmte Verkehrssituationen, wie beispielsweise der Verkehrsunfall 10 auf Navigationssystem 13 konkreter dargestellt werden. Auf weitere mögliche mit den Car2X-Nachrichten 17 austauschbare Informationen wird später im Rahmen der Fig. 2 näher eingegangen.

Zum Austausch der Car2X-Nachrichten 17 moduliert der Car2X-Transceiver 16 entweder eine Car2X-Nachricht 17 auf ein nachstehend Car2X-Signal 18 genanntes Übertragungssignal und versendet es über eine nachstehend Car2X-Antenne 19 genannte Antenne an die anderen Knoten 3, 5, 8 im Car2X-Netzwerk 1 oder er empfängt über die Car2X-Antenne 19 ein Car2X-Signal 18 und filtert aus diesem die entsprechende Car2X-Nachricht 17 heraus. Darauf wird an späterer Stelle im Rahmen der Fig. 3 näher eingegangen. In Fig. 1 ist dabei dargestellt, dass der Car2X-Transciever 16 eine Car2X-Nachricht 17 an das Navigationssystem 13 unter der Annahme ausgibt, dass diese in der oben beschriebenen Weise Informationen enthält, die auf diesem darstellbar sind. Das ist jedoch nicht einschränkend zu verstehen. Insbesondere kann zweckmäßigerweise auch der GNSS-Empfänger 11 direkt oder, wie in Fig. 2 gezeigt, indirekt mit dem Car2X-Transceiver 16 verbunden sein, um die eigene absolute geographische Lage 12 im Car2X-Netzwerk 1 zu versenden.

Die Struktur der Car2X-Nachricht 17 sowie des Car2X-Signals 18 und damit der Aufbau des Car2X-Netzwerkes können in einem Kommunikationsprotokoll definiert werden. Es gibt bereits derartige Kommunikationsprotokolle länderspezifisch unter anderem im Rahmen der ETSI TC ITS bei ETSI in Europa und im Rahmen der IEEE 1609 bei IEEE sowie bei SAE in den Vereinigten Staaten von Amerika. Weitere Informationen hierzu lassen sich in den genannten Spezifikationen finden.

Das Fahrzeug 3 kann optional noch die oben genannte Umfeldsensorik in Form einer Kamera 20 und eines Radarsensors 21 aufweisen. Mit der Kamera 20 kann das Fahrzeug 3 innerhalb eines Bildwinkels 22 ein Bild einer Ansicht aufnehmen, die in Fahrtrichtung 7 des Fahrzeuges 3 betrachtet vor dem Fahrzeug 3 liegt. Zudem kann das Fahrzeug 3 mit dem Radarsensor 21 und entsprechenden Radarstrahlen 23 in Fahrtrichtung 7 des Fahrzeuges 3 betrachtet Objekte erkennen und in einer an sich bekannten Weise den Abstand zum Fahrzeug 3 bestimmen.

Um die mit einer Car2X-Nachricht 17 übertragbaren Informationen zu konkretisieren, soll nachstehend zunächst auf den Aufbau des Fahrzeuges 3 und des weiteren Fahrzeuges 5 beispielhaft anhand des Fahrzeuges 3 eingegangen werden. Das Fahrzeug 3 besitzt verschiedene Sicherheitskomponenten von denen in Fig. 2 ein elektronischer Bremsassistent 24, EBA 24 genannt, und eine an sich bekannte Fahrdynamikregelung 25 gezeigt ist. Während der DE 10 2004 030 994 A1 Details zum EBA 24 entnommen werden können, können der DE 10 2011 080 789 A1 Details zur Fahrdynamikregelung 25 entnommen werden.

Das Fahrzeug 3 umfasst ein Chassis 26 und vier Räder 27. Jedes Rad 27 kann über eine ortsfest am Chassis 26 befestigte Bremse 28 gegenüber dem Chassis 26 verlangsamt werden, um eine Bewegung des Fahrzeuges 3 auf der Straße 2 zu verlangsamen.

Dabei kann es in einer dem Fachmann bekannten Weise passieren, dass das die Räder 27 des Fahrzeugs 3 ihre Bodenhaftung verlieren und sich das Fahrzeug 3 sogar von einer beispielsweise über ein nicht weiter gezeigtes Lenkrad vorgegebenen Trajektorie durch Untersteuern oder Übersteuern wegbewegt. Dies wird durch die Fahrdynamikregelung 25 vermieden.

In der nicht beanspruchten Ausführung weist das Fahrzeug 4 dafür Drehzahlsensoren 29 an den Rädern 27 auf, die eine Drehzahl 30 der Räder 27 erfassen.

Basierend auf den erfassten Drehzahlen 30 kann ein Regler 31 in einer dem Fachmann bekannten Weise bestimmen, ob das Fahrzeug 3 auf der Fahrbahn rutscht oder sogar von der oben genannten vorgegebenen Trajektorie abweicht und entsprechend mit einem an sich bekannten Reglerausgangssignal 32 darauf reagieren. Das Reglerausgangssignal 32 kann dann von einer Stelleinrichtung 33 verwendet werden, um mittels Stellsignalen 34 Stellglieder, wie die Bremsen 28 anzusteuern, die auf das Rutschen und die Abweichung von der vorgegebenen Trajektorie in an sich bekannter Weise reagieren.

Der EBA 24 kann über die Kamera 20 erfasste Bilddaten 35 und über den Radarsensor 21 erfasste Abstandsdaten 36 zu Objekten wie Fahrzeugen in Fahrtrichtung 7 vor dem Fahrzeug 3 auswerten und basierend darauf eine Gefahrensituation erfassen. Diese könnte beispielsweise gegeben sein, wenn sich ein Objekt vor dem Fahrzeug 3 diesem mit einer zu hohen Geschwindigkeit nähert. In einem solchen Fall könnte der EBA 24 über ein Notbremssignal 37 die Stelleinrichtung 33 einweisen, über die Stellsignale 34 eine Notbremsung mit den Bremsen 28 auszuführen.

Jedes Mal, wenn der EBA 24 oder die Fahrdynamikregelung 25 über die Stelleinrichtung 33 in das Fahrzeug 4 eingreifen, kann beispielsweise die Stelleinrichtung 33 ein in Fig. 2 gepunktet dargestelltes Berichtssignal 38 ausgeben. Zweckmäßigerweise sollte das Berichtssignal 38 konkretisieren, ob der Eingriff durch den EBA 24 oder die Fahrdynamikregelung 25 bedingt war. Ein derartiges Berichtssignal 38 kann von einer beliebigen Instanz im Fahrzeug 3, also beispielsweise auch vom Regler 31 der Fahrdynamikregelung 25 erzeugt werden. Eine Nachrichtenerzeugungseinrichtung 39 könnte dann basierend auf dem Berichtssignal 38, der absoluten geographischen Lage 12 und einem in Fig.3 gezeigten aus einem Zeitgeber 40 ausgegebenen Zeitstempel 41 eine Car2X-Nachricht 17 erzeugen, mit der der Eingriff des EBAs 24 und/oder der Fahrdynamikregelung 25 als Information über das Car2X-Netzwerk 1 den anderen Knoten 5, 8 berichtet werden kann. Die so erzeugte Car2X-Nachricht 17 könnte dann über die Car2X-Antenne 19 im Car2X-Netzwerk 1 versendet werden.

In dem Beispiel der Fig. 1 wurde ausgeführt, dass die in den Car2X-Nachrichten 17 ausgetauschten Information über die absolute geographische Lage 12 der einzelnen Knoten 3, 5, 8 und/oder über Ereignisse wie der Verkehrsunfall 10 und/oder wie ein Eingriff des EBAs 24 und/oder der Fahrdynamikregelung 25 auf dem Navigationssystem 13 zur Orientierung des Fahrers dargestellt werden könnten. Alternativ oder zusätzlich können basierend auf den in den Car2X-Nachrichten 17 ausgetauschten Informationen aber auch aktiv Stellsignale 34 beispielsweise mit der Stelleinrichtung 33 generiert werden. Wird beispielsweise der Eingriff des EBA 24 als Information in einer Car2X-Nachricht 17 übermittelt, könnte beispielsweise basierend auf dem Empfang dieser Car2X-Nachricht 17 automatisch der EBA 24 in dem empfangenden Fahrzeug 3, 8 ausgelöst werden.

Nachstehend soll anhand der Fig. 3 die Übertragung einer Car2X-Nachricht 17 über das Car2X-Netzwerk 1 erläutert werden, das in Fig. 3 der Übersichtlichkeit halber mit einer Wolke angedeutet ist. Als Inhalt der Car2X-Nachricht 17 soll beispielsweise ein durch die Stelleinrichtung 33 mit dem Berichtssignal 38 berichteter Eingriff durch den EBA 24 in das am Verkehrsunfall 10 beteiligte Unfall-Fahrzeug 8 angenommen werden.

Wie bereits erläutert erzeugt die Nachrichtenerzeugungseinrichtung 39 basierend auf dem Berichtssignal 38, der absoluten geographischen Lage 12 und dem Zeitstempel 41 die Car2X-Nachricht 17 gemäß dem oben erwähnten Kommunikationsprotokoll. Die Nachrichtenerzeugungseinrichtung 39 kann dabei prinzipiell auch Teil des Car2X-Transceivers 16 sein.

Aus der Car2X-Nachricht 17 werden in dem Car2X-Transceiver 16 des Unfall-Fahrzeuges 8 in einer Datenpaketerzeugungseinrichtung 42 Datenpaketen 43 erzeugt. Durch das Erzeugen von Datenpaketen 43 können Car2X-Nachrichten 17 aus verschiedenen Anwendungen in dem Unfall-Fahrzeug 8 zu einem einzigen Datenstrom zusammengefasst werden, um das Car2X-Signal 18 zu erzeugen. Die Datenpaketerzeugungseinrichtung 42 basiert auf einer Netzwerk- und Transportschicht (eng. network and transport layer), deren Aufgabe es bekanntlich ist die Netzwerkdaten aus verschiedenen Anwendungen zu routen. Im Falle der Weiterleitung eines empfangenen Datenpaketes 43 an weitere Teilnehmer 3, 5, 8 im Car2X-Netzwerk 1 stellen die Nachrichtenerzeugungserzeugungseinrichtung 39 und die Datenpaketerzeugungseinrichtung 42 gemeinsam die Netzwerk- und Transportschicht dar, die aber im Wesentlichen von der oben genannten Spezifikation des Kommunikationsprotokolls für das Car2X-Netzwerk 1 abhängig ist.

Die generierten Datenpakete 43 werden in einer Modulationseinrichtung 44 auf das Car2X-Signal 18 aufmoduliert und im Car2X-Netzwerk 1 drahtlos versendet. Die Modulationseinrichtung 44 entspricht daher einer Schnittstellenschicht, deren Aufgabe es ist, das Unfall-Fahrzeug 8 physikalisch an das Car2X-Netzwerk 1 anzubinden. Auch der Aufbau der Modulationseinrichtung 44 ist von der oben genannten Spezifikation des Kommunikationsprotokolls für das Car2X-Netzwerk 1 abhängig.

Auf Seiten des nicht am Verkehrsunfall 10 beteiligten Fahrzeuges 3 kann das vom Unfall-Fahrzeug 8 versendete Car2X-Signal 18 dann über die Car2X-Antenne 19 empfangen werden.

Um die Car2X-Nachricht 17 aus dem Car2X-Signal 18 zu extrahieren weist der Car2X-Transceiver 16 des Fahrzeuges 3 eine Demodulationseinrichtung 45 auf, die die senderseitige Modulation der Datenpakete 43 in an sich bekannter Weise rückgängig macht. Entsprechend kann eine Nachrichtenextraktionseinrichtung 46 die Car2X-Nachrichten 17 aus den Datenpaketen 43 extrahieren und den Anwendungen im Fahrzeug 3, wie dem Navigationssystem 13 oder auch der Stelleinrichtung 33 zur Verfügung stellen. Letztendlich stellen die Demodulationseinrichtung 45 und die Nachrichtenextraktionseinrichtung 46 die empfangsseitigen Gegenstücke entsprechend der oben genannten Netzwerk und Transportschicht und der Schnittstellenschicht dar und sind ebenfalls von der oben genannten Spezifikation des Kommunikationsprotokolls für das Car2X-Netzwerk 1 abhängig.

Zu Details der einzelnen Netzwerkschichten wird daher auf die einschlägigen Spezifikationen verwiesen.

Insbesondere in Hochlastsituationen, wenn sich auf der Straße 2 eine Vielzahl von Knoten 3, 5, 8 im Car2X-Netzwerk 1 befinden, müssen in den jeweiligen Knoten 3, 5, 8 zur Verarbeitung aller im Car2X-Netzwerk 1 versendeten Car2X-Nachrichten 17 entsprechend hohe Rechenressourcen freigehalten werden, um empfängerseitig die Verarbeitung aller Car2X-Nachrichten 17 innerhalb bestimmter Zeitschranken zu garantieren. Die Bereitstellung dieser hohen Rechenressourcen ist mit einem entsprechend hohen Kostenaufwand verbunden, der im Rahmen der vorliegenden Ausführung durch die Einführung von Vorfiltern 47, 48 reduziert werden soll.

Empfängt beispielsweise das nicht am Verkehrsunfall 10 beteiligte Fahrzeug 3 eine Car2X-Nachricht 17, die über diesen Verkehrsunfall 10 informiert, dann könnte das nicht am Verkehrsunfall 10 beteiligte Fahrzeug 3 das entsprechende Datenpaket 43 mit dieser Car2X-Nachricht 17 mit einem eigenen Zeitstempel 41 und seiner geographischen Lage 12 versehen und als weiterzuleitende Car2X-Nachricht 17' an andere Knoten 5, 8 im Car2X-Netzwerk 1 weiterleiten. Die Entscheidung über die Weiterleitung kann beispielsweise in der Nachrichtenerzeugungseinrichtung 39 erfolgen, die dann die potentiell weiterzuleitende Nachricht 17 in dem Datenpaket 43 zumindest teilweise entpacken muss.

Zwar soll auf die eigentliche Entscheidungsfindung in der Nachrichtenerzeugungseinrichtung 39 nicht weiter im Detail eingegangen werden, was aber deutlich werden soll ist, dass die Entscheidung, ob eine in einem Car2X-Signal 18 empfangene und in einem Datenpaket 43 verpackte Car2X-Nachricht 17 weitergeleitet werden soll, grundsätzlich basierend auf der Information der Car2X-Nachricht 17 getroffen wird, weshalb im Rahmen dieses Schemas jede Car2X-Nachricht 17 aus dem Car2X-Signal 18 extrahiert werden müsste.

In gleicher Weise verhält es sich mit Car2X-Nachrichten 17, die intern im nicht am Unfall beteiligten Fahrzeug 3 als Empfangsknoten im Car2X-Netzwerk 1 weiterverarbeitet werden sollen, um beispielsweise dem Verkehrsunfall 10 auf dem Navigationssystem 13 darzustellen. Auch hier müsste die Car2X-Nachricht 17 inhaltlich analysiert werden, um grundsätzlich die Entscheidung zu treffen, ob die mit der Car2X-Nachricht 17 gemeldete Information, also beispielsweise der Verkehrsunfall 10, relevant ist und damit weiterverarbeitet werden muss.

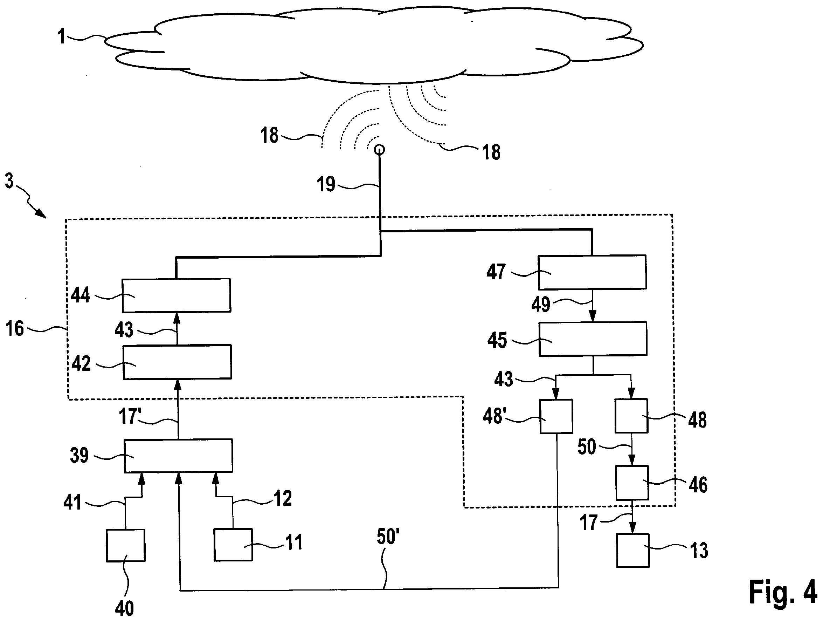

Hier greift die nicht beanspruchte Ausführung mit in Fig. 4 gezeigten Vorfiltern 47, 48, 48' an. Während das erste Vorfilter 47 ein gefiltertes Car2X-Signal 49 ausgibt, in dem ein Teil der Datenpakete 43 und damit ein Teil der Car2X-Nachrichten 17 herausgefiltert sein können, ohne dass diese je entpackt werden, gibt das zweite Vorfilter 48 gefilterte Datenpakete 50 an die Nachrichtenerzeugungseinrichtung 46 aus, aus denen ebenfalls ein Teil der ursprünglich in dem Car2X-Signal 18 versendeten Datenpakete 43 herausgefiltert sein können, ohne dass die darin gepackten Car2X-Nachrichten 17 je entpackt werden. Damit brauchen das Navigationssystem 13 und gegebenenfalls die Nachrichtenerzeugungseinrichtung 46 lediglich über einen Teil der ursprünglich in dem Car2X-Signal 18 enthaltenen Car2X-Nachrichten 17 zu entscheiden, so dass die anderen, herausgefilterten Car2X-Nachrichten 17 nicht mehr entschlüsselt werden brauchen. In gleicher Weise filtert das dritte Vorfilter 48' ebenfalls einen Teil der Datenpakete 43 aus dem gefilterten Car2X-Signal 18 heraus und gibt die entsprechend mit dem dritten Vorfilter 48' gefilterten Datenpakete 50' an die Nachrichtenerzeugungseinrichtung 39 aus, die dann weiter inhaltlich in der zuvor beschriebenen Weise über die Weiterleitung des gefilterten Datenpaketes 50' entscheiden kann.

Die Idee hinter den Vorfiltern 47, 48, 48' ist grundsätzlich, potentiell irrelevante Car2X-Nachrichten 17 möglichst frühzeitig auszusortieren, um zu vermeiden, dass diese durch ein Element in der Verarbeitungskette unnötigerweise verarbeitet werden müssen, weil sie entweder als weitergeleitete Nachricht 17' und/oder als intern zu verarbeitende Nachricht 17 irrelevant beziehungsweise redundant sind. Auf diese Weise kann der Rechenaufwand für die grundsätzlich notwendige Entscheidung über eine Weiterverarbeitung einer in dem Car2X-Singal 18 empfangenen Car2X-Nachricht 17 deutlich reduziert werden.

Während das erste Vorfilter 47 dabei das Car2X-Signal 18 ohne Kenntnis der eigentlichen Car2X-Nachricht 17 filtern könnte, könnten das zweite und dritte Vorfilter 48, 48' die Datenpakete 43 ohne Kenntnis der eigentlichen Car2X-Nachricht 17 filtern. Zwar wird dadurch nicht mehr sichergestellt, dass von den im Fahrzeug-Ad-Hoc-Netzwerk 1 versendeten Car2X-Nachrichten 17 auch alle sicherheitskritischen Car2X-Nachrichten 17, wie beispielsweise eine Meldung über einen Eingriff des EBA 24 auch tatsächlich an allen Zielknoten 5, 8 im Car2X-Netzwerk 1 ankommen beziehungsweise im Empfangsknoten 3 weiterverarbeitet werden. In der Regel aber werden derart sicherheitskritische Car2X-Nachrichten 17 nicht nur einmal versendet, so dass im statistischen Mittel davon auszugehen ist, dass derart sicherheitskritische Car2X-Nachrichten 17 in einem vertretbaren Zeitrahmen die Vorfilter 47, 48, 48' in wenigstens einem Weiterleitungsknoten im Car2X-Netzwerk 1 passieren. Um diesen vertretbaren Zeitrahmen zu klein wie möglich zu halten, können Vorfilter 47, 48, 48' so ausgelegt werden, dass sicherheitskritische Daten mit überdurchschnittlicher Wahrscheinlichkeit die Vorfilter 47, 48, 48' passieren.

Für eine möglichst effiziente Vorfilterung in den Vorfiltern 47, 48, 48' sollte eine vorbestimmte Filterbedingung eingeführt, nach der das Car2X-Signal 18 im ersten Vorfilter 47 und/oder die Datenpakete 43 im zweiten und dritten Vorfilter 48, 48' vorgefiltert werden. Die Idee hinter der vorliegenden Ausführung ist, die vorbestimmte Filterbedingung für Entscheidung über eine Weiterleitung eines empfangenen Datenpaketes 43 an andere Knoten 5, 8 des Car2X-Netzwerkes 1 von der vorbestimmten Filterbedingung für die Entscheidung über die weitere interne Verarbeitung im Empfängerknoten 3 zu trennen und beide Filterungen unabhängig zu behandeln. Dies wird in Fig. 4 mit dem zweiten und dritten Vorfilter 48, 48' realisiert, die zueinander parallel liegen und somit einen Verarbeitungspfad für die weiterzuleitenden Datenpakete 43 von einem Verarbeitungspfad für die intern im Empfängerknoten 3 zu verarbeitenden Datenpakete 43 trennen. Prinzipiell kann die Trennung der beiden Verarbeitungspfade an einer beliebigen Stelle erfolgen, also bereits vor dem ersten Filter 47 oder intern im ersten Filter 47 an einer beliebigen Stelle. Auch können das zweite und dritte Filter 48, 48' teilweise gemeinsam ausgebildet werden. Die Trennung der beiden Verarbeitungspfade vor dem zweiten und dritten Filter 48, 48' ist daher rein beispielhaft.

Im ersten Vorfilter 47 in einem der beiden Verarbeitungspfade kann das empfangene Car2X-Signal 18 beispielsweise basierend auf einer vorbestimmten Signalstärke als vorbestimmte Filterbedingung gefiltert werden, wobei das empfangene Car2X-Signal 18 mit einer Signalstärke kleiner als die vorbestimmte Signalstärke unterdrückt wird. Alle Sender des Car2X-Signals 18 außerhalb eines von der vorbestimmten Signalstärke abhängigen Empfängerradius würden somit unterdrückt.

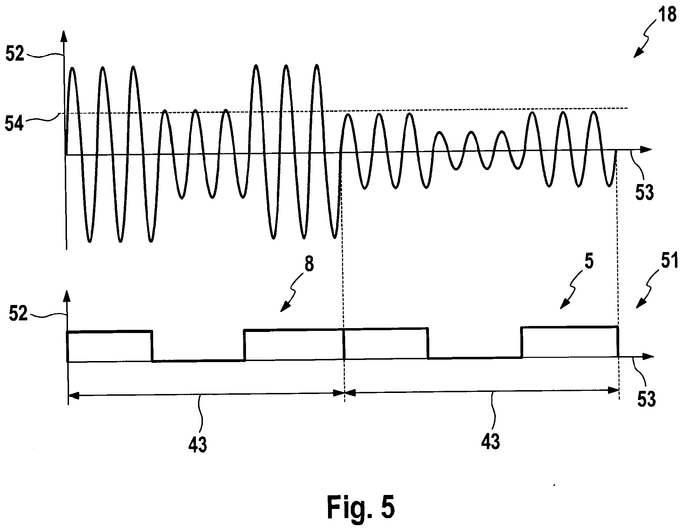

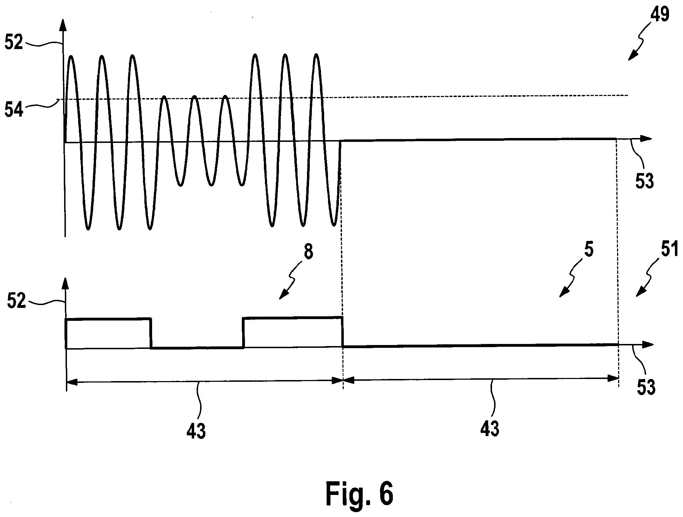

Die vorbestimmte Filterbedingung, die im zweiten Vorfilter 48 umgesetzt werden kann, wird nachstehend anhand von Fig. 5 und 6 erläutert, die ein Beispiel für das Car2X-Signal 18 und ein die zum Car2X-Signal 18 gehörenden Datenpakete 43 tragendes Signal 51 in je einem Signalstärke 52 - Zeit 53 - Diagramm zeigen. Weiterhin soll beispielhaft davon ausgegangen werden, dass auf den Navigationssystem 13 der Verkehrsunfall 10 dargestellt werden soll und dass in dem Car2X-Signal 18 eine Car2X-Nachricht 17 in einem Datenpaket 43 übertragen wird, die den Verkehrsunfall 10 meldet.

Das Car2X-Signal 18 kann ein beliebiges Trägersignal sein, auf das die Datenpakete 43 in beliebiger Weise aufmoduliert sind. Da das Car2X-Signal 18 die Datenpakete 43 aller am Car2X-Netzwerk 1 beteiligten Knoten 3, 5, 8 überträgt, sind neben den Datenpaketen 43 des Unfall-Fahrzeugs 8 auch Datenpakete 43 von Knoten 3, 5, 8 vorhanden, die von dem Fahrzeug 3 weiter entfernt sind, wie beispielsweise eine der beiden Ampeln 5. Wie aus Fig. 5 zu sehen, lässt sich ein derartiger, weiter entfernter Knoten 5 dadurch erkennen, dass seine Datenpakete 43 mit einer Signalstärke 52 übertragen werden, die deutlich kleiner ist, als die Signalstärke 52 der Datenpakete 43 des Unfall-Fahrzeuges 8. An dieser Stelle wird erfindungsgemäß mit der Vorfilterung angegriffen, wobei aus dem Car2X-Signal 18 nur die Datenpakete 43 herausgefiltert werden, die von Car2X-Signal 18 mit einer gewissen Mindestsignalstärke 54 übertragen wurden.

Diese Filterung ist im zweiten Vorfilter 48 realisiert, wobei das zweite Vorfilter 48 dann die Signalstärke 52 des Car2X-Signals 18 zu jedem Datenpaket 43 kennen sollte. Dabei könnte die Mindestsignalstärke 54 so gewählt werden, dass die Anzahl der sich aus dem gefilterten Car2X-Signals 49 des ersten Vorfilters 47 ergebenden Datenpakete 43 an die verfügbare Rechenleistung zum Entpacken und Verarbeiten der gefilterten Datenpakete 50 angepasst wird. Hierbei könnten beispielsweise, wie in Fig. 6 gezeigt, von der Ampel 5 ausgehende Car2X-Nachrichten 17 ausgefiltert werden, weil diese noch zu weit entfernt ist, um als im Rahmen der verfügbaren Rechenressourcen relevant erachtet zu werden.

Das Filtern des Car2X-Signals 18 und/oder der Datenpakete 43 basierend auf der Mindestsignalstärke 54 hat den Effekt, dass Knoten 5, 8 in Car2X-Netzwerk 1 die zu weit entfernt sind, um sicherheitskritisch für das Fahrzeug 3 zu sein, bei einer zu hohen Rechenlast zur Verarbeitung aller im Car2X-Signals 18 ankommenden Datenpakete 43 für die zuvor genannte Datenverarbeitungseinrichtung unbeachtet bleiben, weil es in diesem Fall mit Sicherheit näher am Fahrzeug 3 liegende Knoten 5, 8 im Car2X-Netzwerk 1 und/oder Ereignisse 10 gibt, die aus Gesichtspunkten der Verkehrssicherheit wichtiger sind, da sonst die hohe Rechenlast nicht auftreten würde. Anschaulich gesagt, wird mit der Mindestsignalstärke 54 versucht, im Falle der zu hohen Rechenlast um das Fahrzeug 3 herum Empfangsradien zu legen, außerhalb derer die Datenpakete 43 die Knoten 5, 8 des Car2X-Netzwerkes 1 ignoriert werden. Es kommt dann nicht mehr darauf an, was diese Knoten 5, 8 inhaltlich tatsächlich gesendet haben.

Die Mindestsignalstärke 54 und damit die Empfangsradien sollten jedoch nicht statisch gelegt werden, weil dann im Falle ausreichender Signalverarbeitungsressourcen zur Verarbeitung Datenpakete 43 in dem Car2X-Signal 18 unnötigerweise Datenpakete 43 ignoriert oder aussortiert werden.

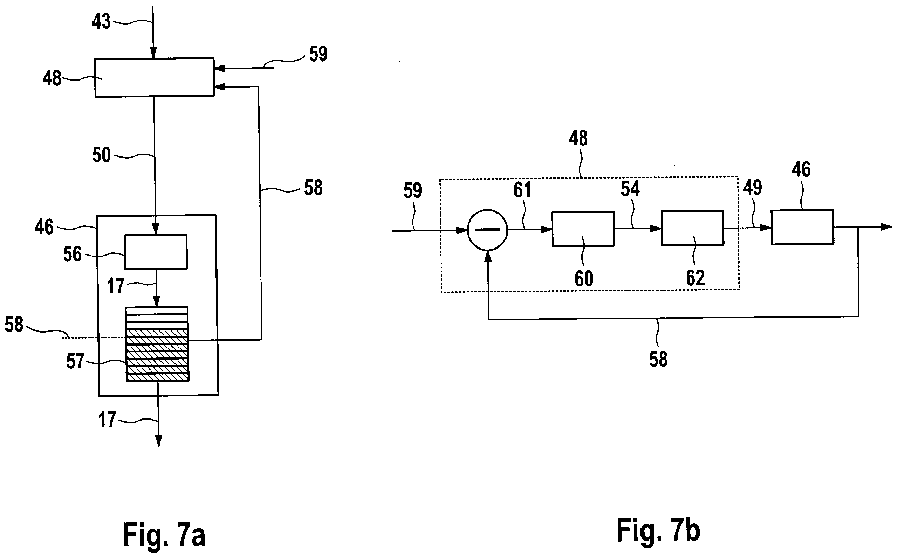

Daher sollte die Mindestsignalstärke 54 variabel gewählt werden, was im zweiten Vorfilter 48 basierend auf einer Regelung erfolgen könnte, die in Fig. 7a und 7b gezeigt ist.

Wenn aus den Datenpaketen 43 des gefilterten Car2X-Signals 49 in der Nachrichtenextraktionseinrichtung 46 über eine entsprechende Signalverarbeitungseinrichtung 56 die Car2X-Nachrichten 17 extrahiert sind, können diese in einer Warteschlange 57 hinterlegt werden, wenn diese nicht sofort durch die übergeordneten Signalverarbeitungseinrichtungen, wie beispielsweise das Navigationssystem 13 und/oder die Stelleinrichtung 33 verarbeitet werden können. Als Indikator ob die gesamte Rechenleistung ausreicht oder nicht, kann hier der Ist-Füllgrad 58 der Warteschlage 57 herangezogen werden. Überschreitet der Ist-Füllgrad 58 einen bestimmten Soll-Füllgrad 59, ab dem die Rechenleistung des Gesamtsystems nicht mehr ausreicht, um alle gefilterten Datenpakete 50 zu verarbeiten, kann die Mindestsignalstärke 54 im zweiten Vorfilter 48 von einem Regler 60 basierend auf einer Regeldifferenz 61 zwischen dem Soll-Füllgrad 59 und dem Ist-Füllgrad 58 entsprechend heraufgesetzt werden, um die Anzahl der gefilterten Datenpakete 50, die an der Nachrichtenextraktionseinrichtung 46 ankommt, mit einem entsprechenden von der Mindestsignalstärke 54 abhängigen Filterelement 62 gemäß Fig. 5 und 6 zu verringern.

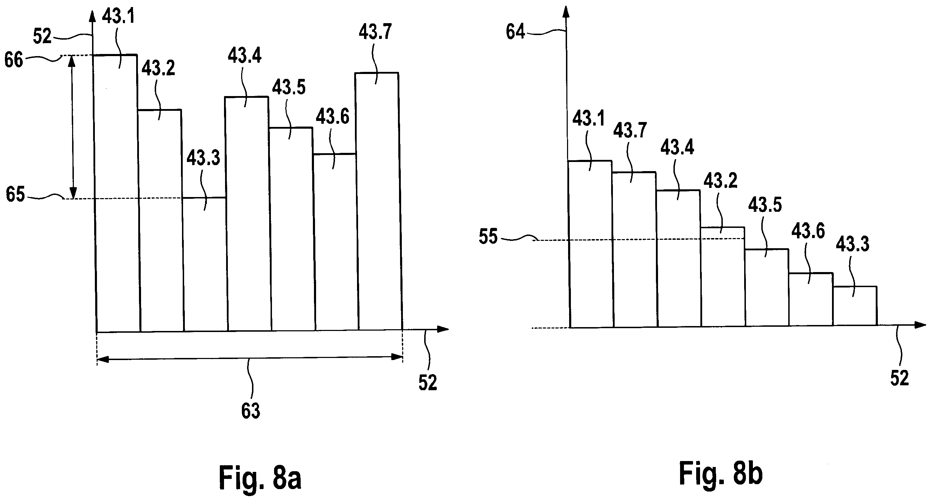

Alternativ oder zusätzlich zu dem zuvor beschriebenen Regelkreis kann das zweite Vorfilter 48 die Datenpakete 43 auch gemäß Fig. 8a und 8b filtern:

Zunächst kann für eine Anzahl von Datenpaketen, die in Fig. 8a und 8b mit den Bezugszeichen 43.1 bis 43.7 versehen wurde in einem Betrachtungszeitraum 63 normiert werden. Hierzu kann die Signalstärke 52 jedes Datenpaketes 43.1 bis 43.7 gemäß einer beliebigen Normierungvorschrift, wie beispielsweise:

$$A_{norm}(A) \;=\; (A - A_{min}) \;/\; (A_{max} - A_{min}).$$

Dabei stellen A die Signalstärke 52, $A_{norm}$ die normierte Signalstärke 64, $A_{min}$ die minimale Signalstärke 65 im Betrachtungszeitraum 63 und $A_{max}$ die maximale Signalstärke 66 im Betrachtungszeitraum 63 dar. Eine alternative Normierungsvorschrift wäre beispielsweise

$$A_{norm}(A) \;=\; A \;/\; (A_{max} - A_{min}).$$

Die so in ihrer Signalstärke 52 normierten Datenpakete 43.1 bis 43.7 können dann gemäß Fig. 8b sortiert beziehungsweise bei Unterschreiten der weiteren Minimalsignalstärke 65 für das zweite Vorfilter 48 aussortiert werden.

Mit der Normierung kann sichergestellt werden, dass Datenpakete 43 in verschiedenen Empfangsszenarien, beispielsweise in der Stadt oder auf offenem Gelände standardisiert behandelt werden.

Das zweite Vorfilter 48 kann um weitere, nicht gezeigte und nicht beanspruchte Filterelemente erweitert werden. Eine Möglichkeit wäre, am Fahrzeug 3 Empfangssektoren zu definieren und die Car2X-Antenne 19 gerichtet auszuführen. Dann könne in jeden dieser definierten Empfangssektoren eine Car2X-Antenne 19 gerichtet werden, wodurch die Empfangsrichtung des Car2X-Signals 18 und/oder der Datenpakete 43 ermittelt werden könnte. Dabei muss nicht zwangsläufig für jede gerichtete Car2X-Antenne 19 ein eigener Transceiver 16 bereitgestellt sein. Beispielsweise könnten die Empfangssektoren ausgehend von der Fahrtrichtung 7 des Fahrzeuges 3 gesehen vor dem Fahrzeug 3, hinter dem Fahrzeug 3, links vom Fahrzeug 3 und rechts vom Fahrzeug 3 definiert werden. Basierend auf der Bewertung der Datenpakete 43 in Abhängigkeit dieser Empfangssektoren können Situationen wie Kreuzungen auf der Straße 2 besser bewertet werden. Es ist in der Regel davon auszugehen, dass Car2X-Signale 18, die gesehen in Fahrtrichtung 7 von vorn oder von hinten zum Fahrzeug 3 empfangen werden, höhere Signalpegel 52 haben als Car2X-Signale 18, die von links oder von rechts zum Fahrzeug 3 empfangen werden. Dies könnte dann bei der Bestimmung des normierten Signalpegels 64 berücksichtigt werden, denn gefährlich sind häufig Datenpakete 43 übertragende Car2X-Signale 18 die aus den Empfangssektoren links und rechts vom Fahrzeug 3, z.B. kurz vor einer Kollision an einer Kreuzung auf der Straße 2 kommen. Bei der Normierung des Signalpegels 52 zum normierten Signalpegel 64 kann beispielsweise auch das wahrscheinliche Fahrmanöver des Fahrzeugs 3 berücksichtigt werden, denn biegt das Fahrzeug z.B. nach links ab, so sind Car2X-Signal 18 von links kommend wichtiger als bei einer Rückwärtsfahrt des Fahrzeuges 3. Alternativ könnten die Empfangssektoren aber auch statt im Rahmen der Normierung im Rahmen einer Gewichtung berücksichtigt werden.

Bei der Bewertung der empfangenen Datenpakete 43 in Abhängigkeit von der Empfangsrichtung könnte in die Normierung oder Gewichtung des Signalpegels 52 die Richtcharakteristik der entsprechenden Car2X-Antenne 19 für die jeweilige Empfangsrichtung ebenfalls mit berücksichtigt werden. Diese Richtcharakteristik könnte beispielsweise vermessen werden und wird in den meisten Fällen zur Bestimmung der Empfangsrichtung ohnehin bereits benötigt. Somit können Unterschiede im Signalpegel 52 mehrerer empfangener Datenpakete 43, die sich alleine aus der Richtcharakteristik der Car2X-Antennen 19 ergeben, für die weitere Verarbeitung bzw. Bewertung herausgerechnet werden.

Zudem könnte auch in Situationen, in denen die Anzahl der eigentlich zu verarbeitenden Datenpakete 43 die zur Verfügung stehende Rechenkapazität übersteigt, die Anzahl zu verarbeitender Datenpakete 43 von ein und demselben Sender, also beispielsweise des Unfall-Fahrzeuges 8, reduziert werden, indem gleichartige Datenpakete 43, die beispielsweise auf den Unfall 10 hinweisen gezielt ausgelassen und damit verworfen werden.

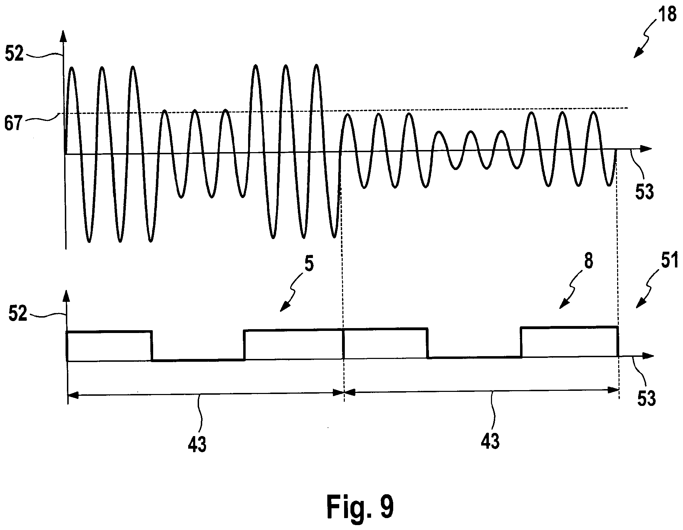

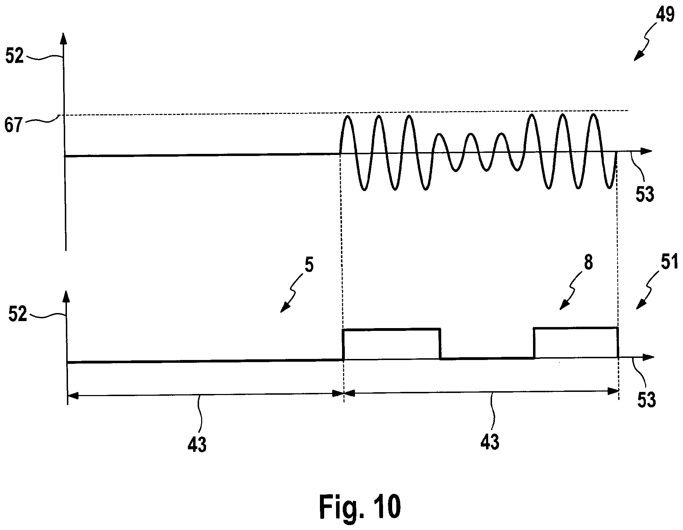

Im dritten Vorfilter 48' im anderen der beiden oben genannten Verarbeitungspfade wird eine weitere vorbestimmte Filterbedingung verwendet, die von der Filterbedingung im zweiten Vorfilter 48 unabhängig sein sollte. Die vorbestimmte Filterbedingung für das dritte Vorfilter 48' wird nachstehend anhand von Fig. 9 und 10 erläutert, die das Car2X-Signal 18 und das die zum Car2X-Signal 18 gehörenden Datenpakete 43 tragende Signal 51 in je einem Signalstärke 52 - Zeit 53 - Diagramm zeigen. Die Fig. 9 entspricht dabei im Wesentlichen der Fig. 5.

Im Gegensatz zum zweiten Vorfilter 48 werden erfindungsgemäß in dem dritten Vorfilter 48' die Datenpakete 43 aus dem vorgefilterten Car2X-Signal 49 basierend auf einer Maximalsignalstärke 67 gefiltert, wobei auch hier das dritte Vorfilter 48' die Signalstärke 52 des Car2X-Signals 18 zu jedem Datenpaket 43 kennen müsste. Dabei sollte die Maximalsignalstärke 67 der Fig. 9 und 10 so gewählt werden, dass aus den sich aus dem gefilterten Car2X-Signal 49 ergebenden Datenpaketen 43 so viele Datenpakete ausgefiltert werden, dass die gefilterten und zur Nachrichtenerzeugungseinrichtung 39 ausgegebenen, weiterzuleitenden Datenpakete 50' mit einer verfügbaren Rechenleistung und/oder einer verfügbaren Kanalkapazität an andere Knoten im Car2X-Netzwerk 1 weitergeleitet werden können.

Das Filtern des Car2X-Signals 18 und/oder der Datenpakete 43 basierend auf der Maximalsignalstärke 67 hat den Effekt, dass das Fahrzeug 3 und damit der Weiterleitungsknoten empfangene Datenpakete 43 von Knoten 5, 8 in dem Car2X-Netzwerk 1 ignoriert, die sich zu nah an diesem befinden, denn in diesem Falle kann das Fahrzeug 3 als Weiterleitungsknoten nicht signifikant mehr Empfänger erreichen, als der ursprünglich das Datenpaket aussendende Knoten 5, 8. Befindet sich beispielsweise, anders als in Fig. 1 gezeigt, eine der Ampeln 5 näher am nicht am Unfall 10 beteiligten Fahrzeug 3, als das Unfall-fahrzeug 8, könnte das nicht am Unfall beteiligte Fahrzeug 3, wie in Fig. 10 gezeigt, alle Datenpakete 43 der Ampel 5 zur Weiterleitung ausfiltern, weil es den Sendebereich der Ampel 5 nicht signifikant erhöhen kann.

Dabei könnte die Maximalsignalstärke 67 in einem nicht beanspruchten Beispiel analog zur Mindestsignalstärke 54 im zweiten Vorfilter 48 geregelt oder anderweitig abhängig vom Lastzustand der nachgelagerten Verarbeitungseinrichtung oder auch vom Auslastungszustand des Sendekanals des Car2X-Netzwerkes 1 eingestellt werden.

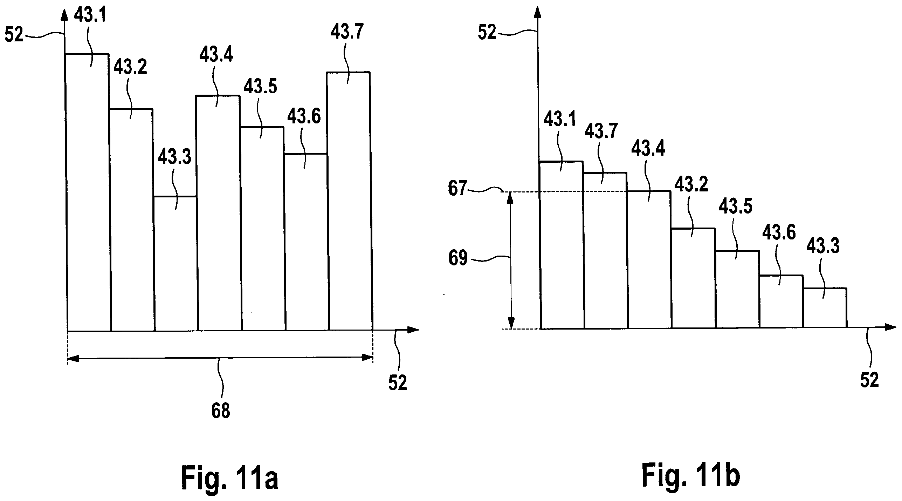

Eine Möglichkeit bei der Einstellung der Maximalsignalstärke 67 den Auslastungszustand des Sendekanals des Car2X-Netzwerkes 1 zu berücksichtigen wäre, die Maximalfeldstärke 54 basierend auf einer statistischen Bedingung einzustellen. Die statistische Bedingung kann über einen vorbestimmten in Fig. 11a angedeuteten Zeitraum 68 definiert werden, in dem eine bestimmte Anzahl an empfangenen Datenpaketen 43.1

bis 43.7 betrachtet wird. Selbstverständlich könnten zur Definition der statistischen Bedingung auch die gefilterten Datenpakete 43 nach dem ersten Vorfilter 47 betrachtet werden.

Die statistische Bedingung für die Maximalfeldstärke 67 kann nun in Form eines statistischen Quantils definiert werden, im Rahmen dessen die Maximalfeldstärke 67 so gewählt wird, dass von den betrachteten Datenpaketen 41.1 bis 43.7 nach der Filterung im dritten Vorfilter 48' nur ein bestimmter Unterschreitungsanteil an diesen betrachteten Datenpaketen 43.1 bis 43.7 Berücksichtigung findet. Dazu kann das Quantil beispielsweise als Perzentil 69 definiert werden, im Rahmen dessen beispielsweise nur ein bestimmter Prozentsatz an Datenpaketen 43.1 bis 43.7 mit den niedrigsten Signalstärken 52 nach der dritten Vorfilterung 48' weiterverwendet wird. Zur Verdeutlichung dieser Herangehensweise sind die im vorbestimmten Zeitraum 68 betrachteten Datenpakete 43.1 bis 43.7 in

Fig. 11a in Empfangsreihenfolge und in Fig. 11b sortiert nach ihren Signalstärken 52, mit denen das Car2X-Signal 18 empfangen wurde, dargestellt.

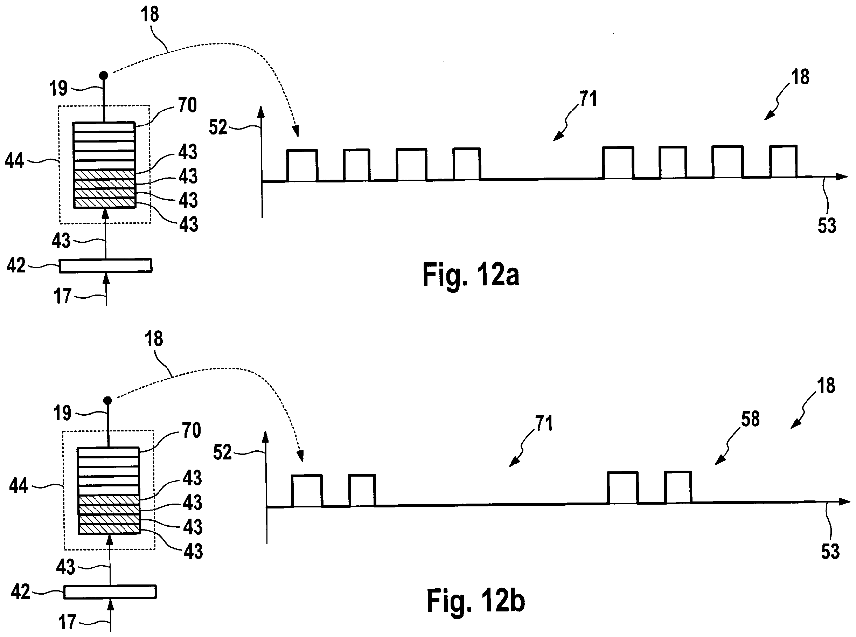

Alternativ oder zusätzlich können in einem nicht beanspruchten Beispiel die einzelnen Datenpakete 43 im dritten Vorfilter 48' auch basierend auf ihrer Priorität gefiltert und aussortiert werden. Diese Vorfilterung soll nachstehend anhand der Fig. 12a und 12b näher verdeutlicht werden, in denen die Kanallast des Car2X-Netzwerkes 1 anhand eines beispielhaften Car2X-Signals 18, wie es mit der Car2X-Antenne 19 abgegriffen werden kann, in zwei verschiedenen Zuständen des Car2X-Netzwerkes 1 dargestellt ist.

Hierzu ist zunächst zu erwähnen, dass Car2X-Nachrichten 17, 17' senderseitig grundsätzlich nach dem FIFO genannten *"first in first* out"-Prinzip verpackt und versendet werden sollten. Hierzu können beispielsweise Warteschlangen 70 verwendet werden, in denen die Datenpaketerzeugungseinrichtung 42 die aus den Car2X-Nachrichten 17, 17' erzeugten Datenpakete 43 hinterlegt und die Modulationseinrichtung 44 die Datenpakete 43 entsprechend ihrer Reihenfolge, in der sie in die Warteschlange 57 eingelegt sind, auf das Car2X-Signal 18 aufmoduliert.

Gibt es, wie in Fig. 12a gezeigt, nur wenige freie Sendeplätze 71 im Car2X-Signal 18, dann dauert es entsprechend lange, bis die Datenpakete 43 in der Warteschlange 70 abgearbeitet und versendet sind. Entsprechend schneller geht es, wenn es, wie in Fig. 12b gezeigt, entsprechend mehr freie Sendeplätze 71 gibt. Je höher die Kanallast im Car2X-Netzwerk 1 ist, desto weniger freie Sendeplätze 71 stehen zur Verfügung. Daher sollten bei einer entsprechend hohen Kanallast in die Warteschlange 70 nur Datenpakete 43 mit einer entsprechend hohen Priorität eingestellt werden.

Zwar könnte das Aussortieren durch Nachrichtenerzeugungseinrichtung 42 vorgenommen werden, unter den oben genannten technischen Randbedingungen, die Filterung so früh wie möglich stattfinden zu lassen, sollte bereits das dritte Vorfilter 48' entscheiden, ob ein empfangenes Datenpaket 43 mit einer potentiell weiterzuleitenden Car2X-Nachricht 17 überhaupt entpackt und zur Nachrichtenerzeugungseinrichtung 42 übergeben wird. Kann bereits aus einem empfangenen Datenpaket 43 selbst heraus erkannt werden, dass es eine niederprioritäre Car2X-Nachricht 17 trägt, dann sollte es im Falle weniger freier Sendeplätze 71 und damit im Falle einer hohen Kanallast bereits im dritten Vorfilter 48' aussortiert werden.

Nachstehend wird ein weiteres nicht beanspruchtes Beispiel diskutiert, das ein Verfahren zur Reduzierung der Rechenlast eines Fahrzeug-zu-X-Kommunikationssystems betrifft.

Im Stand der Technik sind sogenannte Fahrzeug-zu-X-Kommunikationssysteme bekannt, die sowohl der Übertragung verkehrsbezogener Daten als auch verschiedener Service-Daten, wie etwa Unterhaltungsanwendungen, dienen. Die Fahrzeug-zu-X-Kommunikation basiert dabei sowohl auf dem Datenaustausch zwischen Fahrzeugen untereinander (Fahrzeug-zu-Fahrzeug-Kommunikation) als auch auf dem Datenaustausch zwischen Fahrzeugen und Infrastruktureinrichtungen (Fahrzeug-zu-Infrastruktur-Kommunikation). Aufgrund der hohen Anforderungen an die Zuverlässigkeit und Datensicherheit von mittels Fahrzeug-zu-X-Kommunikation übertragenen Informationen, werden derartige Informationen zusätzlich oftmals mit einer aufwändigen Sicherheitssignatur bzw. Datenverschlüsselung versehen.

Die Auswertung einer derartigen Sicherheitssignatur bzw. die Decodierung einer derartigen Datenverschlüsselung sind jedoch mit verhältnismäßig hohem Rechenaufwand verbunden. Hinzu kommt das Auftreten besonderer Situationen, wie etwa das Passieren einer vielbefahrenen innerstädtischen Kreuzung zur Hauptverkehrszeit, in denen eine derart große Anzahl an Fahrzeug-zu-X-Botschaften empfangen wird, dass eine Verarbeitung aller empfangenen Fahrzeug-zu-X-Botschaften ebenfalls nur durch das Bereitstellen einer vergleichsweise großen Rechenleistung möglich ist. Um den Rechenaufwand und damit die Beschaffungskosten für ein Rechenmodul eines derartigen Fahrtzeug-zu-X-Kommunikationssystems möglichst gering zu halten, sind im Stand der Technik weiterhin unterschiedliche Vorverarbeitungsverfahren bekannt, die unter allen empfangenen Fahrzeug-zu-X-Botschaften eine Auswahl der zu decodierenden Fahrzeug-zu-X-Botschaften treffen. Die bekannten Vorverarbeitungsverfahren beschränken sich jedoch darauf, die Weiterverarbeitung empfangener Fahrzeug-zu-X-Botschaften im Wesentlichen alleine abhängig zu machen von einer allgemeinen Klassifikation, die in erster Linie den Anforderungen von im Empfängerfahrzeug vorhandenen Anwendungssystemen folgt.

Es ist daher die Aufgabe des weiteren nicht beanspruchten Beispiels ein flexibleres und situationsangepassteres Vorverarbeitungsverfahren für die Fahrzeug-zu-X-Kommunikation vorzuschlagen.

Diese Aufgabe wird durch das Verfahren gemäß dem weiteren nicht beanspruchten Beispiel zur Reduzierung der Rechenlast eines Fahrzeug-zu-X-Kommunikationssystems gelöst.

Das weitere nicht beanspruchte Beispiel berücksichtigt dabei, dass drei Schritte im Ablauf der Verarbeitung einer empfangenen Fahrzeug-zu-X-Botschaft den verhältnismäßig größten Anteil an Rechenzeit benötigen. Dies sind:

- Prüfung der Datensicherheitssignatur,
- Georouting, also das botschaftsabhängige Weiterleiten bzw. Wiederversenden einer empfangenen Fahrzeug-zu-X-Botschaft
- Weiterverarbeitung der empfangenen und Fahrzeug-zu-X-Botschaften in den kommunikationsbasierten Anwendungen.

Insbesondere bei den sogenannten DENM-Botschaften, bei denen ein Georouting vorgesehen ist, ist gemäß dem Stand der Technik stets ein Kompromiss notwendig zwischen den Anforderungen des Georouting und den Anforderungen der eigenen kommunikationsbasierten Anwendungen des Fahrzeugs.

In dem weiteren nicht beanspruchten Beispiel ist es daher vorgesehen, dass bei einer Vorverarbeitung bzw. Filterung aus drei vorgegebenen Entscheidungsmöglichkeiten ausgewählt wird:

- Sofortiges Verwerfen ohne irgendeine Art von Weiterverarbeitung,
- Kein Georouting (aber Weiterführen an die eigenen kommunikationsbasierten Anwendungen des Fahrzeugs) und
- Nur Georouting (aber kein Weiterführen an die eigenen kommunikationsbasierten Anwendungen des Fahrzeugs).

Sofern ein Datenpaket bzw. eine Fahrzeug-zu-X-Botschaft als relevant gekennzeichnet bzw. erkannt wird, wird sie vollständig verarbeitet, d.h. es wird keine der oben genannten drei vorgegebenen Entscheidungsmöglichkeiten ausgeführt.

Bei einer hohen Empfangsfeldstärke der Fahrzeug-zu-X-Botschaft ist es vorgesehen, dass kein Georouting erfolgt, da der Absender vergleichsweise nah ist. Eine Vergrößerung des Verbreitungsgebiets der Fahrzeug-zu-X-Botschaft wäre somit ohnehin kaum gegeben.

Bei einer geringen Empfangsfeldstärke der Fahrzeug-zu-X-Botschaft, deren Empfänger zudem nicht im Zielgebiet der Fahrzeug-zu-X-Botschaft liegt, ist es vorgesehen, dass nur ein Georouting durchgeführt wird, um die Fahrzeug-zu-X-Botschaft in das Zielgebiet zu übertragen, das eigene System die Informationen der Fahrzeug-zu-X-Botschaft nicht benötigt.

Weiterhin ist es möglich, dass nur ein Georouting durchgeführt wird, wenn die Art der Fahrzeug-zu-X-Botschaft einer Art entspricht, die von keiner der kommunikationsbasierten Anwendungen des Fahrzeugs ausgewertet wird.

Außerdem ist es möglich, dass eine Fahrzeug-zu-X-Botschaft sofort verworfen wird, wenn die Art der Fahrzeug-zu-X-Botschaft einer Art entspricht, die von keiner der kommunikationsbasierten Anwendungen des Fahrzeugs ausgewertet wird und die Empfangsfeldstärke sehr hoch ist.

Die Prozesse "Kein Georouting" und "Nur Georouting" können über sogenannte Flags in der empfangenen Fahrzeug-zu-X-Botschaft oder aber über separate sogenannte Task Communication Kanäle realisiert werden.

Das weitere nicht beanspruchte Beispiel führt somit zu dem Vorteil, dass die unterschiedlichen Anforderungen des Georouting und der eigenen kommunikationsbasierten Anwendungen des Fahrzeugs effizient für die Vorverarbeitung genutzt werden können. Somit wird unnötiger Rechenaufwand sowohl für das Georouting als auch für die Auswertung und Verarbeitung durch die eigenen kommunikationsbasierten Anwendungen des Fahrzeugs vermieden.


Es zeigt


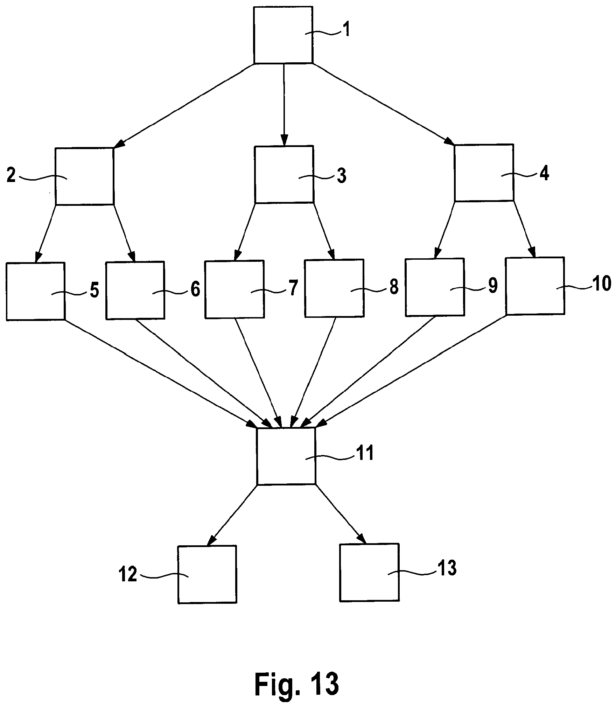

Fig. 13 beispielhaft einen möglichen Ablauf des weiteren nicht beanspruchten Verfahrens in Form eines Flussdiagramms.

Die Bezugszeichen der Fig. 13 referenzieren andere technische Elemente als die Bezugszeichen der Fig. 1 bis 12.

Fig. 13 zeigt beispielhaft einen möglichen Ablauf des nicht beanspruchten Verfahrens in Form eines Flussdiagramms. In Verfahrensschritt 1 wird von einem Fahrzeug-zu-X-Kommunikationssystem eines Kraftfahrzeugs eine Fahrzeug-zu-X-Botschaft empfangen. In Schritt 2 wird nun die Empfangsfeldstärke an der Antenne des Fahrzeug-zu-X-Kommunikationssystems bestimmt. Sofern diese ausreichend hoch ist und einen Schwellwert überschreitet, wird in Schritt 5 entschieden, die Fahrzeug-zu-X-Botschaft nicht erneut zu versenden bzw. weiterzuleiten. Die Fahrzeug-zu-X-Botschaft wird also mittels eines Flags derart markiert, dass aufgrund der hohen Empfangsfeldstärke kein Georouting erfolgen soll. Falls in Schritt 6 festgestellt wird, dass die Empfangsfeldstärke der Fahrzeug-zu-X-Botschaft nur gering ist und einen Schwellenwert unterschreitet, so wird diese weitergeleitet bzw. erneut versendet. Die Fahrzeug-zu-X-Botschaft wird also mittels eines Flags derart markiert, dass aufgrund der geringen Empfangsfeldstärke ein Georouting erfolgen soll. In Schritt 3 wird nun geprüft, ob sich das Empfängerfahrzeug der Fahrzeug-zu-X-Botschaft im Zielgebiet der Fahrzeug-zu-X-Botschaft befindet. Falls sich das Empfängerfahrzeug im Zielgebiet befindet, so wird in Schritt 7 die Fahrzeug-zu-X-Botschaft mittels eines entsprechenden Flags derart markiert, dass sie aufgrund des Zielgebiets an die kommunikationsbasierten Anwendungen des Empfängerfahrzeugs weitergeführt und von diesen verarbeitet werden soll. Falls sich Falls sich das Empfängerfahrzeug jedoch nicht im Zielgebiet befindet, so wird in Schritt 8 die Fahrzeug-zu-X-Botschaft mittels eines entsprechenden Flags derart markiert, dass sie aufgrund des Zielgebiets nicht an die kommunikationsbasierten Anwendungen des Empfängerfahrzeugs werden soll. In Verfahrensschritt 4 wird geprüft, ob die empfangene Fahrzeug-zu-X-Botschaft für das Empfängerfahrzeug relevant ist. Sofern dies der Fall ist, wird in Schritt 9 die Fahrzeug-zu-X-Botschaft mittels eines entsprechenden Flags derart markiert, dass sie an die entsprechenden kommunikationsbasierten Anwendungen des Empfängerfahrzeugs weitergeführt werden soll. Sofern dies jedoch nicht der Fall ist, so wird in Schritt 10 die Fahrzeug-zu-X-Botschaft mittels eines entsprechenden Flags derart markiert, dass sie nicht an die entsprechenden kommunikationsbasierten Anwendungen des Empfängerfahrzeugs weitergeführt werden soll. In Schritt 11 werden nun die Flags, mit denen die Fahrzeug-zu-X-Botschaft markiert wurde, geprüft. Sofern kein Flag vorhanden ist, der besagt, dass die Fahrzeug-zu-X-Botschaft nicht an die kommunikationsbasierten Anwendungen weitergeführt werden soll, so wird sie in Schritt 12 an diese weitergeführt und von diesen verarbeitet. Sofern ebenfalls kein Flag vorhanden ist, der besagt, dass die Fahrzeug-zu-X-Botschaft nicht weitergeleitet bzw. erneut versendet werden werden soll, so wird sie in Schritt 13 dem Georoutingprozess zugeführt und von diesem weitergeleitet bzw. erneut versendet.

**Patentansprüche**

1.  Verfahren zum Empfangen eines wenigstens Positionsdaten (12) enthaltenden Datenpakets (43) in einem Übertragungssignal (18) über ein Fahrzeug-Ad-hoc-Netzwerk (1), umfassend:

    - Filtern (48) des empfangenen Datenpaketes (43) basierend auf einer ersten Filterbedingung (54) und Ausgeben des gefilterten Datenpaketes (50) an eine fahrzeuginterne Verarbeitungseinrichtung (13, 46) zum Verarbeiten des gefilterten Datenpaketes (50), **dadurch gekennzeichnet, dass** parallel ein
    - Filtern (48') des empfangenen Datenpaketes (43) basierend auf einer zweiten Filterbedingung (67) und Ausgeben des gefilterten Datenpaketes (50') an eine Weiterleitungseinrichtung (39, 42, 44) zum Weiterleiten des gefilterten Datenpaketes (50') an einen weiteren Teilnehmer des Fahrzeug-Ad-Hoc-Netzwerkes (1) erfolgt, wobei die erste Filterbedingung (54) eine Mindestsignalstärke (54) für eine Signalstärke (52) des Übertragungssignals (18) und die zweite Filterbedingung (67) eine Maximalfeldstärke (67) für eine Signalstärke (52) des Übertragungssignals (18) umfasst.

2.  Verfahren nach Anspruch 1, wobei das Filtern (48) basierend auf der ersten Filterbedingung (54) und das Filtern (48') basierend auf der zweiten Filterbedingung (67) unabhängig voneinander durchgeführt werden.

3.  Verfahren nach zumindest einem der Ansprüche 1 oder 2, wobei das Filtern (48) des empfangenen Datenpaketes (43) ein Verwerfen des empfangenen Datenpaketes (43) umfasst, wenn die Signalstärke (52) des empfangenen Datenpakets (43) unter die Mindestsignalstärke (54) fällt.

4.  Verfahren nach einem der vorstehenden Ansprüche, wobei die erste Filterbedingung (54) von einem Betrieb der Verarbeitungseinrichtung (13, 46) abhängig ist.

5.  Verfahren nach Anspruch 4, wobei das Filtern (48) des empfangenen Datenpaketes (43) basierend auf einer ersten Filterbedingung (54) ein Verwerfen des empfangenen Datenpaketes (43) umfasst, wenn eine in dem Datenpaket (43) verpackte Nachricht (17) für den Betrieb der Verarbeitungseinrichtung (13, 46) irrelevant ist.

6.  Verfahren nach zumindest einem der vorhergehenden Ansprüche, wobei das Filtern des empfangenen Datenpaketes (43) ein Verwerfen des empfangenen Datenpaketes (43) umfasst, wenn die Signalstärke (52) des empfangenen Datenpakets (43) über der Maximalfeldstärke (67) liegt.

7.  Vorrichtung (48, 48') zur Durchführung eines Verfahrens nach einem der vorstehenden Ansprüche, umfassend: einen Speicher und einen Prozessor, wobei das angegebene Verfahren in Form eines Computerprogramms in dem Speicher hinterlegt ist und der Prozessor zur Ausführung des Verfahrens vorgesehen ist, wenn das Computerprogramm aus dem Speicher in den Prozessor geladen ist.

8.  Transceiver (16) für ein Fahrzeug (3) zum Empfangen von in einem Übertragungssignal (18) versendeten Datenpaketen (43) in einem Fahrzeug-Ad-Hoc-Netzwerk (1), umfassend:

    - eine Antenne (19) zum Empfangen des Übertragungssignals (18), und
    - eine Vorrichtung (48, 48') nach Anspruch 7.

**Claims**

1.  Method for receiving a data packet (43) containing at least position data (12) in a transmission signal (18) over a vehicle ad-hoc network (1), comprising:

    - filtering (48) the received data packet (43) based on a first filter condition (54) and outputting the filtered data packet (50) to a vehicle-internal processing apparatus (13, 46) for processing the filtered data packet (50), **characterized in that**, in parallel,
    - the received data packet (43) is filtered (48') based on a second filter condition (67) and the filtered data packet (50') is output to a forwarding apparatus (39, 42, 44) for forwarding the filtered data packet (50') to a further subscriber of the vehicle ad-hoc network (1), wherein the first filter condition (54) comprises a minimum signal strength (54) for a signal strength (52) of the transmission signal (18) and the second filter condition (67) comprises a maximum field strength (67) for a signal strength (52) of the transmission signal (18).

**2.** Method according to Claim 1, wherein the filtering (48) based on the first filter condition (54) and the filtering (48') based on the second filter condition (67) are performed independently of one another.

**3.** Method according to at least either of Claims 1 and 2, wherein filtering (48) the received data packet (43) comprises discarding the received data packet (43) when the signal strength (52) of the received data packet (43) drops below the minimum signal strength (54).

**4.** Method according to one of the preceding claims, wherein the first filter condition (54) is dependent on operation of the processing apparatus (13, 46).

**5.** Method according to Claim 4, wherein filtering (48) the received data packet (43) based on a first filter condition (54) comprises discarding the received data packet (43) when a message (17) packaged in the data packet (43) is irrelevant to the operation of the processing apparatus (13, 46).

**6.** Method according to at least one of the preceding claims, wherein filtering the received data packet (43) comprises discarding the received data packet (43) when the signal strength (52) of the received data packet (43) is above the maximum field strength (67).

**7.** Device (48, 48') for performing a method according to one of the preceding claims, comprising: a memory and a processor, wherein the cited method is stored in the memory in the form of a computer program and the processor is intended to execute the method when the computer program is loaded from the memory into the processor.

**8.** Transceiver (16) for a vehicle (3) for receiving data packets (43) sent in a transmission signal (18) in a vehicle ad-hoc network (1), comprising:

- an antenna (19) for receiving the transmission signal (18), and
- a device (48, 48') according to Claim 7.

**Revendications**

**1.** Procédé permettant de recevoir un paquet de données (43) contenant au moins des données de position (12) dans un signal de transmission (18) à travers un réseau ad hoc de véhicule (1), comprenant les étapes consistant à :

- filtrer (48) le paquet de données reçu (43) sur la base d'une première condition de filtrage (54) et sortir le paquet de données filtré (50) à un dispositif de traitement interne au véhicule (13, 46) pour le traitement du paquet de données filtré (50),
**caractérisé en ce qu'**en parallèle
- un filtrage (48') du paquet de données reçu (43) sur la base d'une deuxième condition de filtrage (67) et une sortie du paquet de données filtré (50') à un dispositif de retransmission (39, 42, 44) pour la retransmission du paquet de données filtré (50') à un autre usager du réseau ad hoc de véhicule (1) sont effectués, la première condition de filtrage (54) comprenant une intensité de signal minimale (54) pour une intensité de signal (52) du signal de transmission (18), et la deuxième condition de filtrage (67) comprenant une intensité de champ maximale (67) pour une intensité de signal (52) du signal de transmission (18).

**2.** Procédé selon la revendication 1, dans lequel le filtrage (48) sur la base de la première condition de filtrage (54) et le filtrage (48') sur la base de la deuxième condition de filtrage (67) sont effectués indépendamment l'un de l'autre.

**3.** Procédé selon au moins l'une des revendications 1 ou 2, dans lequel le filtrage (48) du paquet de données reçu (43) comprend un rejet du paquet de données reçu (43) si l'intensité de signal (52) du paquet de données reçu (43) est inférieure à l'intensité de signal minimale (54).

**4.** Procédé selon l'une quelconque des revendications précédentes, dans lequel la première condition de filtrage (54) dépend d'un fonctionnement du dispositif de traitement (13, 46).

**5.** Procédé selon la revendication 4, dans lequel le filtrage (48) du paquet de données reçu (43) sur la base d'une première condition de filtrage (54) comprend un rejet du paquet de données reçu (43) si un message (17) contenu dans le paquet de données (43) n'est pas pertinent pour le fonctionnement du dispositif de traitement (13, 46).

6. Procédé selon au moins l'une des revendications précédentes, dans lequel le filtrage du paquet de données reçu (43) comprend un rejet du paquet de données reçu (43) si l'intensité de signal (52) du paquet de données reçu (43) est supérieure à l'intensité de champ maximale (67).

7. Dispositif (48, 48') permettant d'exécuter un procédé selon l'une quelconque des revendications précédentes, comprenant :

une mémoire et un processeur, ledit procédé étant stocké dans la mémoire sous la forme d'un programme informatique, et le processeur étant prévu pour exécuter le procédé si le programme informatique est chargé dans le processeur à partir de la mémoire.

8. Emetteur/récepteur (16) pour un véhicule (3), permettant de recevoir des paquets de données (43) envoyés dans un signal de transmission (18) dans un réseau ad hoc de véhicule (1), comprenant :

- une antenne (19) pour recevoir le signal de transmission (18), et
- un dispositif (48, 48') selon la revendication 7.

Fig. 1

EP 3 039 662 B1

**Fig. 2**

EP 3 039 662 B1

**Fig. 3**

EP 3 039 662 B1

**Fig. 4**

EP 3 039 662 B1

**Fig. 5**

Fig. 6

EP 3 039 662 B1

Fig. 7b

Fig. 7a

Fig. 8b

Fig. 8a

Fig. 9

Fig. 10

Fig. 11b

Fig. 11a

Fig. 12a

Fig. 12b

Fig. 13

**EP 3 039 662 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010139526 A1
- US 2013083679 A1
- DE 102004030994 A1
- DE 102011080789 A1